# EUROPÄISCHE PATENTANMELDUNG

(11) **EP 1 106 578 A1**
(43) Veröffentlichungstag der Anmeldung: **13.06.2001**
(21) Anmeldenummer: 00126352.4
(22) Anmeldetag: 02.12.2000
(51) Int. Cl.: C02F 1/42, C02F 1/28, B01D 35/04

(54) **Wasserfiltervorrichtung**

(30) Priorität: 06.12.1999 DE 19958648
(71) Anmelder: Brita GmbH, 65232 Taunusstein (DE)
(72) Erfinder: Malsy, Jürgen, 63110 Rodgau (DE); Heitele, Dr. Bernd, 65232 Taunusstein (DE)
(74) Vertreter: Weber, Dieter, Dr.

(57) **Zusammenfassung**

Die vorliegende Erfindung betrifft eine Wasserfiltereinrichtung zur Reinigung und mindestens teilweisen Enthärtung von Rohwasser, mit einem Rohwasserzulauf (15) und einem Reinwasserabgang (12), wobei eine Trenneinrichtung (27) für die Aufteilung des über den Zulauf (27) einströmenden Rohwassers in zwei Teilströme vorgesehen ist. Um eine ein Verfahren und eine Vorrichtung der eingangs genannten Art zu schaffen, welche es ermöglichen, daß das gereinigte, der Vorrichtung entnommene Wasser zwar einerseits nicht vollständig entcarbonisiert ist, gleichzeitig jedoch alle anderen unerwünschten Substanzen vollständig aus dem Wasser entfernt sind, wird erfindungsgemäß vorgeschlagen, daß für beide Teilströme mindestens teilweise unterschiedliche Filterstrecken (A, B) vorgesehen sind.

## Beschreibung

Die vorliegende Erfindung betrifft ein Verfahren und eine Vorrichtung zur Reinigung und mindestens teilweisen Enthärtung von Rohwasser, wobei die betreffende Vorrichtung einen Rohwasserzulauf und einen Reinwasserabgang aufweist und wobei eine Trenneinrichtung für die Aufteilung des über den Zulauf einströmenden Rohwassers in zwei Teilströme vorgesehen ist. Bei dem entsprechenden Verfahren wird Wasser einer Wasserfiltereinrichtung zugeführt, jedoch wird das zugeführte Wasser in einer zu der Wasserfiltereinrichtung gehörigen Armatur getrennt bzw. in zwei verschiedene Teilströme aufgeteilt, wobei der eine Teil durch Filtermaterial hindurchgeführt wird und nach dem Durchtritt durch das Filtermaterial wieder mit dem vorher abgezweigten Teilstrom zusammengeführt und aus dem Reinwasserabgang abgezogen wird.

Entsprechende Verfahren und Vorrichtungen sind schon seit längerem bekannt. Die Abzweigung eines Teilstroms aus dem Rohwasser und die anschließende Vereinigung mit dem gefilterten Wasser wird vor allem deshalb vorgenommen, weil entsprechende Filtereinrichtungen im Regelfall lonenaustauscherharz enthalten, das eine im wesentlichen vollständige Enthärtung, das heißt zumindest eine Entcarbonisierung des Rohwassers bewirkt. Dies kann allerdings für manche Anwendungsfälle unerwünscht sein. Während manche Speisen und Getränke besser mit vollständig enthärtetem Wasser hergestellt werden können, zumal dann, wenn die betreffenden Speisen und Getränke ohnehin selbst die aus dem Wasser zuvor entfernten lonen enthalten, kann es bei anderen Speisen und Getränken erwünscht sein, sie mit einem nicht vollständig enthärteten Wasser herzustellen. Da es prinzipiell nicht möglich ist, die Filterung einfach abzubrechen, wenn ein gewisser Enthärtungsgrad des Wassers erreicht ist, geht man in solchen Fällen zumeist so vor, daß man, wie bereits erwähnt, einen Teil des Rohwassers zuvor abzweigt und ihn vor dem Abziehen aus der Wasserfiltereinrichtung wieder mit dem gefilterten Hauptstrom vereinigt, so daß das der Filtereinrichtung entnommene Wasser aus einer Mischung aus vollständig enthärtetem und nicht enthärtetem Wasser besteht, so daß sich entsprechend dem Mischungsverhältnis ein gewünschter Härtegrad des Wassers einstellt.

Andererseits hat allerdings diese Art der nur teilweisen Filterung den Nachteil, daß neben der Carbonhärte, die mindestens teilweise in dem Wasser enthalten bleiben soll, auch andere, möglicherweise unerwünschte lonen oder sonstige Bestandteile in dem abgezweigten Teilstrom enthalten sind und damit auch wieder in das gefilterte und vermeintlich gereinigte Wasser gelangen. Dabei kann es sich um unerwünschte Geschmacksbeimengungen, in Form verschiedener organischer Substanzen, oder aber auch um toxische Stoffe oder Krankheitskeime handeln, die auf jeden Fall aus dem Wasser entfernt werden sollten.

Gegenüber diesem Stand der Technik liegt der vorliegenden Erfindung die Aufgabe zugrunde, ein Verfahren und eine Vorrichtung der eingangs genannten Art zu schaffen, welche es ermöglichen, daß das gereinigte, der Vorrichtung entnommene Wasser zwar einerseits nicht vollständig entcarbonisiert ist, gleichzeitig jedoch alle anderen unerwünschten Substanzen vollständig aus dem Wasser entfernt sind.

Hinsichtlich des eingangs genannten Verfahrens wird diese Aufgabe dadurch gelöst, daß beide Teilströme über mindestens teilweise unterschiedliche Filterstrecken geführt werden. Dabei kann die eine Filterstrecke im wesentlichen einer herkömmlichen Filterung entsprechen, bei der auch eine weitgehende Entcarbonisierung des Trinkwassers stattfindet, der andere Teilstrom wird jedoch über ein anderes Filtermaterial geführt, welches zwar keine Entcarbonisierung bewirkt, wohl aber andere unerwünschte Stoffe aus dem Wasser entfernt. Die beiden auf diese Art und Weise unterschiedlich gefilterten Teilströme werden anschließend wieder vereint und als gefiltertes Reinwasser abgezogen, welches genau den gewünschten Härtegrad aufweist und dennoch keimreduziert und von organischen, geschmacksbeeinträchtigenden Stoffen wie zum Beispiel Chlor und Chlorverbindungen sowie von toxischen Stoffen (z. B. Trihalomethylverbindungen) befreit ist.

Hinsichtlich der eingangs genannten Vorrichtung wird die der Erfindung zugrunde liegende Aufgabe dadurch gelöst, daß für beide Teilströme mindestens teilweise unterschiedliche Filterstrekken (A, B) vorgesehen sind.

Für die Beschreibung und Darstellung der vorliegenden Erfindung und bevorzugter Ausführungsformen derselben wird Bezug genommen auf drei weitere, gleichzeitig eingereichte Patentanmeldungen derselben Anmelderin, die auf ihrem jeweiligen Deckblatt mit den internen Zeichen NE-70, NE-71 und NE-73 bezeichnet sind. Der Inhalt dieser Anmeldungen soll die vorliegende Anmeldung ergänzen, soweit einzelne Merkmale hier nicht ausdrücklich beschrieben sind.

Weitere Vorteile und Merkmale ergeben sich aus den abhängigen Ansprüchen, von denen im folgenden noch einige erläutert werden.

Wie bereits erwähnt, verlaufen die beiden Teilströme nicht nur entlang unterschiedlicher Filterstrecken, sondern vorzugsweise auch über mindestens teilweise unterschiedliche Filtermaterialien. Grundsätzlich wäre es aber auch möglich, beide Teilströme durch das gleiche Filtermaterial hindurchströmen zu lassen, jedoch für eine Filterstrecke einen wesentlich kürzeren Weg durch das Filtermaterial vorzusehen als für den anderen Teilstrom, so daß eine vollständige Entcarbonisierung auf der kürzeren Filterstrecke praktisch nicht stattfinden kann.

Bevorzugt ist jedoch die Ausgestaltung, bei welcher entlang der unterschiedlichen Filterstrecken auch die teilweise unterschiedlichen Filtermaterialien vorgesehen sind. Zweckmäßig ist eine Verbindungs- bzw. Vermischungseinrichtung zur Zusammenführung der beiden Teilströme vorgesehen, die möglichst so ausgestaltet sein sollte, daß eine gute Durchmischung beider Teilströme erfolgt.

Besonders bevorzugt ist eine Ausgestaltung der Erfindung, bei welcher diese Verbindungseinrichtung im wesentlichen vor einer der Filterstrecken angeordnet ist, die dementsprechend von beiden Teilströmen gemeinsam durchströmt wird. Zweckmäßigerweise handelt es sich dabei um den Endabschnitt der Fließstrecken. Dieser Endabschnitt der Filterstrecken sollte als Filtermaterial in der bevorzugten Ausführungsform der Erfindung im wesentlichen nur Aktivkohle oder ein ähnliches Filterelement enthalten, zum Beispiel Aktivkohleblöcke, Mikrofilter oder Membranfilter. Die zweite Filterstrecke kann zwar teilweise auch aus der bereits erwähnten Filterstrecke mit Aktivkohle bestehen, verläuft allerdings zusätzlich auch noch über ein anders Filtermaterial, wie z.B. ein lonenaustauscherharz.

Bei einer anderen Ausführungsform ist vorgesehen, dass ein erster Teilstrom in einem äußeren, ringförmigen Bereich, welcher den größten Teil des Querschnittes des Behälters umfasst, vom Deckel in Richtung Boden nacheinander durch zwei Filtermaterialien, vorzugsweise ein lonenaustauscherharz und Aktivkohle, hindurchgeführt wird, ein zweiter Teilstrom konzentrisch hierzu durch einen inneren Ringraum vom Deckel zum Bodenbereich und dort durch einen Aktivkohlefilter geführt wird, wobei beide Teilströme im Bodenbereich des Behälters zusammengeführt und durch ein zentrales Steigrohr zum Deckel heraufgeführt werden.

Das Verhältnis der beiden Teilströme ist zweckmäßigerweise über ein Ventil einstellbar.

Weiterhin sollte eine Meßeinrichtung zur Erfassung der Gesamtmenge des durch die Filtereinrichtung hindurchströmenden Wassers als auch zur Erfassung der Teilströme bzw. des Teilungsverhältnisses der Teilströme vorgesehen sein.

Zweckmäßig ist es weiterhin, wenn ein Hauptstrom des Rohwassers durch ein zentrales bzw. eine zentrale Öffnung der Filtereinrichtung zugeführt wird, während der abgezweigte Teilstrom konzentrisch unmittelbar um den Hauptstrom herum zugeführt wird. Auch das Reinwasser kann dann wiederum durch einen konzentrisch den ringförmigen Teilstrom umgebenden Kanal zurückgeführt werden.

Besonders bevorzugt ist eine Ausführungsform der Erfindung, bei welcher das Filtermaterial in einem im wesentlichen zylindrischen, gegebenenfalls auch konischen oder einem anderen, vorwiegend rotationssymmetrischen Raum aufgenommen und in zwei verschiedenen Lagen übereinander geschichtet ist. Bei dieser Ausgestaltung kann z.B. durch ein zentrales Rohr das Rohwasser unter die unterste Schicht geführt und dort über den Querschnitt des Behälters verteilt werden und durch die untere Schicht des Filtermaterials aufsteigen bzw. durch den Druck des Rohwassers heraufgedrückt werden. Der konzentrisch zu dem inneren Hauptstrom zugeführte Teilstrom wird durch ein das innere Rohr konzentrisch umgebendes Rohr zugeführt, welches aber deutlich kürzer ist als das innere Rohr und auf diese Weise in erheblichem Abstand vom Grund des Behälters endet bzw. dort Ausströmöffnungen für den Teilstrom aufweist, wobei dieser abgezweigte Teilstrom vorzugsweise in einem Bereich oberhalb der unteren Schicht und unmittelbar unterhalb der oberen Schicht des Filtermaterials endet.

Die beiden Schichten können durch eine, vorzugsweise elastisch nachgiebige, Schicht voneinander getrennt sein, die gut wasserdurchlässig ist. Wenn der abgezweigte Teilstrom in dieser Schicht mündet, so verteilt sich der abgezweigte Teilstrom in diesem Bereich über den Querschnitt des Behälters und durchmischt sich dabei mit dem aus der unteren Filterschicht aufsteigenden Hauptstrom. Die verbleibende Filterstrecke der oberen Schicht des Filtermaterials wird dann von beiden Strömen, das heißt dem Hauptstrom und dem Teilstrom, gemeinsam durchflossen. Dabei ist eine Ausgestaltung der Erfindung besonders bevorzugt, bei welcher diese obere Filterschicht aus Aktivkohle oder einem ähnlichen Adsorbens besteht, z.B. käme auch ein Zeolith, ein Aktivkohleblock oder ein Membranendfilter in Frage, während die untere Schicht des Filtermaterials z.B. aus einem lonenaustauschmaterial besteht. Dies bedeutet konkret, daß der Hauptstrom des Wassers in dem lonenaustauschermaterial enthärtet wird und anschließend durch die Aktivkohle von organischen Bestandteilen, toxischen Stoffen befreit und keimreduziert wird, während der Teilstrom zwar ebenfalls von den organischen Bestandteilen, anderen toxischen Stoffen befreit und keimreduziert wird, jedoch nicht enthärtet wird. Auf diese Weise entsteht ein gereinigtes, keimarmes und geschmacklich nicht beeinträchtigtes Reinwasser mit einer gewissen Resthärte, die zudem noch regelbar ist, indem das Verhältnis von Hauptstrom zu Teilstrom eingestellt wird.

Da die Abzweigung des Teilstromes von der ursprünglichen Rohwasserzufuhr über ein Ventil einstellbar ist, ist auch das Verhältnis von Hauptstrom zu Teilstrom beliebig wählbar, das heißt der Hauptstrom muß nicht notwendigerweise den größten Teil des Rohwassers enthalten, auch wenn letzteres der Regelfall ist und aus diesem Grunde die Begriffe "Hauptstrom" und "Teilstrom" gewählt wurden.

Das erfindungsgemäße Verfahren sieht dementsprechend vor, die Rohwasserzufuhr in einen Hauptstrom und einen Teilstrom aufzuteilen, den Hauptstrom durch eine erste Filterstrecke zu führen und den Nebenstrom durch eine zweite Filterstrecke zu führen, wobei in der bevorzugten Ausführungsform die erwähnte zweite Filterstrecke sowohl vom Hauptstrom als auch vom Teilstrom durchströmt wird, der Hauptstrom zuvor jedoch durch eine zusätzliche Filterstrecke hindurchgeführt wurde, so daß er insgesamt einen anderen Filterstreckenweg nimmt als der Teilstrom. Dementsprechend werden vor dem Durchlaufen der zweiten Filterstrecke die beiden Teilströme wieder miteinander vereinigt. Grundsätzlich wäre es auch möglich, daß der Teilstrom vor der Vereinigung mit dem Hauptstrom noch ein anders Filtermaterial durchströmt, das z.B. in einem entsprechend aufgeweiteten konzentrischen Rohr, welches das innere Hauptrohr umgibt, untergebracht sein könnte.

Eine weitere zweckmäßige Ausgestaltung des erfindungsgemäßen Verfahrens sieht vor, daß sowohl die Gesamtmenge des den Filter durchströmenden Wassers als auch die Menge der einzelnen Teilströme bzw. das Verhältnis von Teilstrom und Hauptstrom zueinander erfaßt wird. Hierzu reicht es jedoch aus, daß eine Messung entweder des Teilstroms und des Hauptstroms, des Rückstroms und des Hauptstroms oder des Rückstroms und des abgezweigten Teilstroms erfolgt, da sich der Rückstrom grundsätzlich als Summe aus Hauptstrom und Teilstrom ergibt. Dabei ist die letztere Möglichkeit bevorzugt, nämlich die Gesamtmenge durch Erfassung des Rückstromes zu messen und davon unabhängig den (im allgemeinen kleineren) abgezweigten Teilstrom zu messen, wobei sich der Hauptstrom als Differenz aus Rückstrom und Teilstrom ergibt. Insbesondere wenn der abgezweigte Teilstrom verhältnismäßig klein ist, erhält man auf diese Weise eine genauere Messung des Verhältnisses von Teilstrom zu Hauptstrom, so daß sich das Ventil für die Aufteilung der Ströme auf der Basis dieser Meßergebnisse exakter einstellen läßt.

Es versteht sich, daß insbesondere beim Anschluß der erfindungsgemäßen Wasserfiltervorrichtung an eine Druckwasserleitung die Vorrichtung im Prinzip in jeder beliebigen Orientierung betrieben werden kann, also insbesondere die vorstehenden Beschreibungen der relativen Anordnungen durch "oben" und "unten" auch ebensogut vertauscht oder durch "rechts" und "links" ersetzt werden könnten, was an dem Funktionsprinzip der erfindungsgemäßen Vorrichtung und des entsprechenden Verfahrens nichts ändert.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- Figur 1: einen axialen Längsschnitt durch eine erfindungsgemäße Wasserfiltervorrichtung,
- Figur 2: eine Detailansicht aus Figur 1, welche den oberen Verteilerbereich zeigt, und
- Figur 3: einen horizontalen Schnitt durch die in Figur 1 erkennbare Meßvorrichtung 5.
- Figur 4: eine weitere alternative Ausführungsform eines Außenbehälters mit eingesetztem Innenbehälter und aufgesetztem Deckel.

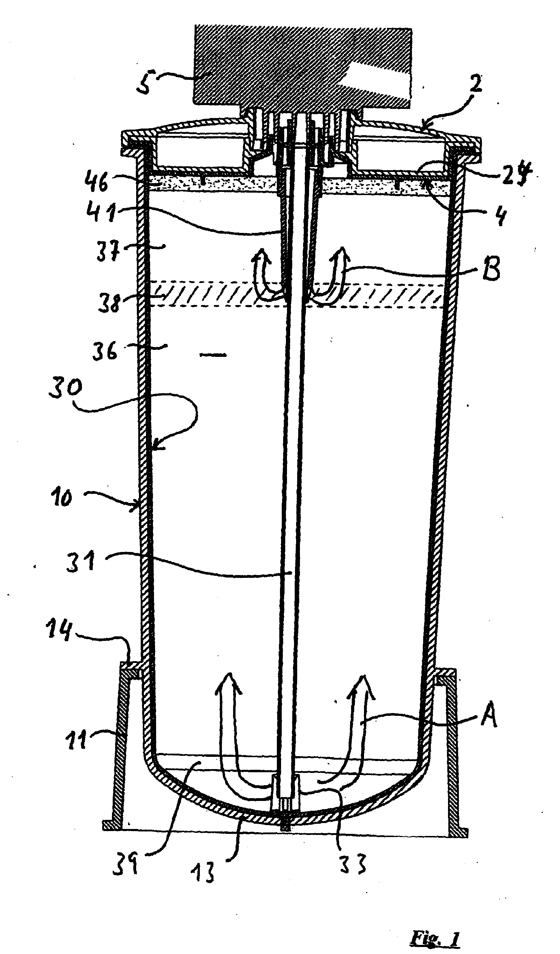

In Figur 1 erkennt man einen Druckbehälter 10 mit einer inneren Auskleidung bzw. einem inneren Behälter 30, in dem im unteren Bereich ein Filtermaterial 36 und im oberen Bereich ein Filtermaterial 37 aufgenommen sind, die durch eine poröse und vorzugsweise elastische Schicht 38 voneinander getrennt sind. Das Filtermaterial 36 wird am unteren Ende durch eine wasserdurchlässige Rückhalteplatte 39 begrenzt, unter der sich ein Verteilerraum befindet, in dem sich das durch das zentrale Rohr 31 zufließende Wasser eines Hauptstromes verteilt. Der Verteilerraum könnte allerdings auch mit Filtermaterial ausgefüllt sein, so daß man die Verteilerscheibe 39 nicht unbedingt benötigen würde. Der Druckbehälter 10 weist einen Boden 13, einen Standfuß 11 und einen auf dem Standfuß 11 sich abstützenden Flansch 14 auf. Verteilerelemente 33 stützen das Rohr am Boden 13 bzw. der inneren Auskleidung ab und sorgen für eine gleichmäßige Verteilung des Hauptstromes unterhalb der Trenn- bzw. Rückhalteplatte 39. Weitere Details des Druckbehälters 10 und der Innenverkleidung 30, sowie die Ausgestaltung der zugehörigen Deckel 2 und 4 dieser Behälter sind aus einer gleichzeitig eingereichten weiteren Anmeldung derselben Anmelderin zu entnehmen.

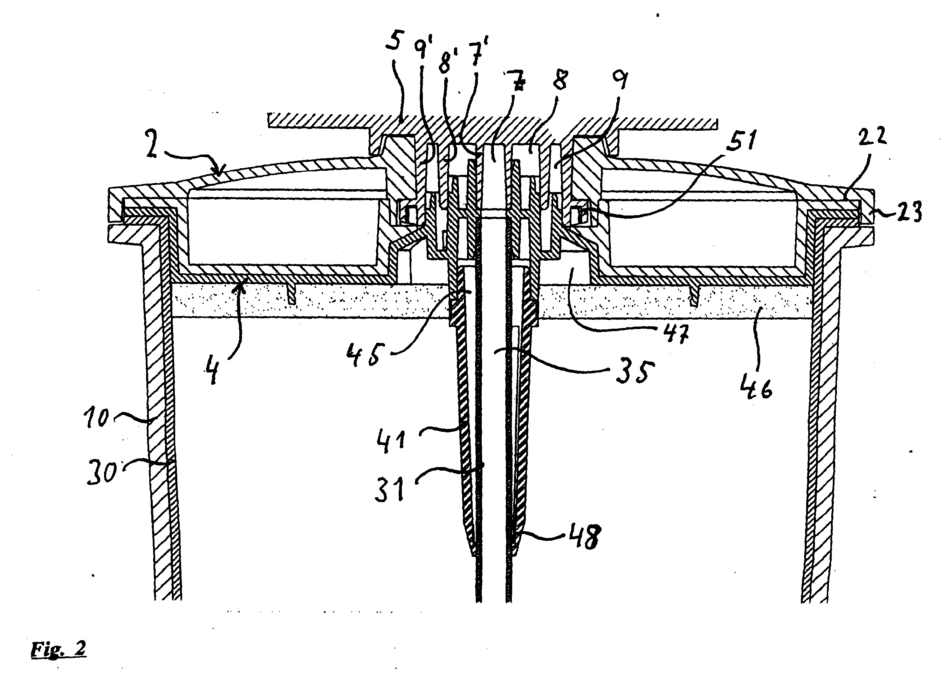

In Figur 2 erkennt man in einer Vergrößerung den oberen Ausschnitt aus Figur 1. Nicht dargestellt ist hier die poröse und elastische Trennschicht 38, die genau auf der Höhe von schlitzförmigen Austrittsöffnungen 48 liegt, die am unteren Ende eines verjüngt nach unten zulaufenden Rohres 41 vorgesehen sind, welches das innere Hauptrohr 31 konzentrisch umgibt. Eine aufgesetzte Armatur 5 mit integrierter Meßvorrichtung weist Verbindungselemente 7', 8', 9' und 51 für die Verbindung mit korrespondierenden Teilen eines Deckels 2 des Druckbehälters 10 auf, um eine feste und dichte Verbindung mehrerer Strömungskanäle zu erzielen. Ein zentraler Rohransatz 7' ist mit dem Rohr 31 bzw. mit Übergangsstücken eines dazwischen liegenden Deckels 4 dicht verbunden, so daß der zentrale Kanal 7 der Armatur 5 mit dem Kanal 35 des Zentralrohrs 31 in Verbindung steht. Durch einen den zentralen Rohransatz 7' ringförmig umgebenden weiteren Rohransatz 8' wird ein Ringkanal 8 an der Armatur gebildet, der wiederum über die Verbindungsstücke des Zwischendeckels 4 mit dem ringförmigen Kanal 45 in Verbindung steht, der von dem das Rohr 31 konzentrisch umgebenden Rohr 41 gebildet wird, welches sich konisch verjüngend nach unten verläuft und mit seinem unteren freien Ende das Hauptrohr 31 im wesentlichen abgedichtet umfaßt und in diesem unteren Endabschnitt die bereits erwähnten, schlitzförmigen Austrittsöffnungen 48 aufweist, die genau auf Höhe einer wasserdurchlässigen, elastischen Schicht 38 zwischen dem unteren Filtermaterial 36 und dem oberen Filtermaterial 37 liegen. Das obere Filtermaterial 37 ist noch durch eine Trenn- und Rückhalteschicht 46 abgedeckt, die in erster Linie dazu dient, Filtermaterial und andere möglicherweise vorhandene Schwebeteilchen im Wasser zurückzuhalten, die ansonsten aber wasserdurchlässig ist und die Verbindung zu einem im Deckel 4 gebildeten Ringraum herstellt, der wiederum das obere Ende des Rohres 41 umgibt und der über in dieser Schnittebene nicht erkennbare Öffnungen mit dem darüber liegenden Ringraum 9 in Verbindung steht, der von dem Rohransatz 9' der Armatur 5 gebildet wird, welcher wiederum den bereits erwähnten Rohransatz 8' umgibt.

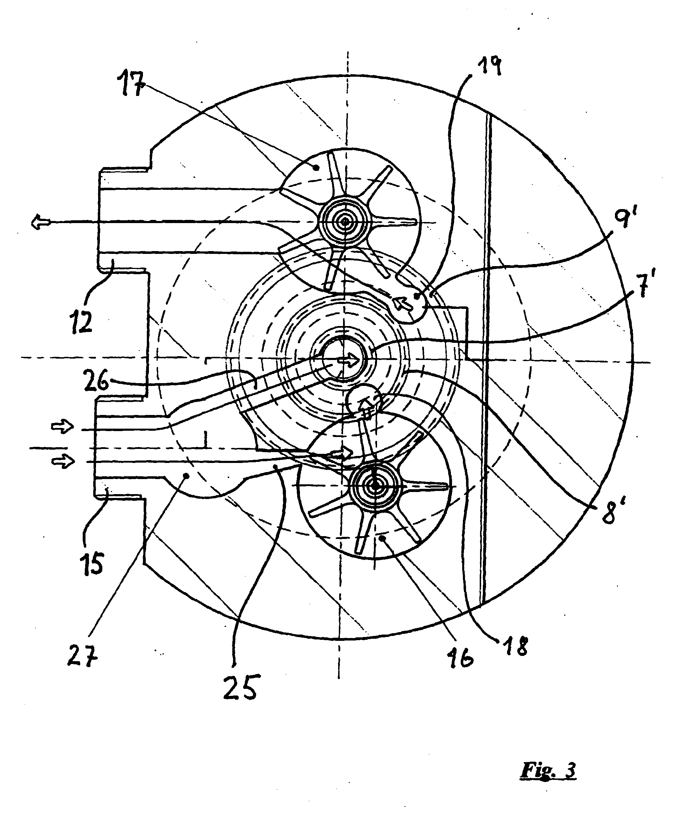

Die eben beschriebenen zentralen bzw. ringförmigen Kanäle 7, 8 und 9 und die entsprechenden Rohransätze 7', 8' und 9' sind in einer Draufsicht nochmals hinter der Schnittebene gemäß Figur 3 zu erkennen, die einen horizontalen Schnitt durch die in den Figuren 1 und 2 nur schematisch angedeutete Armatur 5 zeigt, die eine integrierte Meßvorrichtung enthält. Zunächst erkennt man im linken Teil der Figur 3 zwei Gewindestutzen 12 und 15, die mit Hilfe von Dichtungen und Überwurfmuttern mit entsprechenden Druckwasseranschlüssen verbunden werden, wobei der Gewindestutzen 15 mit der Druckwasserzufuhr verbunden wird und der Gewindestutzen 12 mit einer entsprechenden Entnahmeleitung verbunden ist.

Unmittelbar auf den Druckwasseranschluß 15 folgt ein Ventil 27, welches von außen über ein kleines Handrad oder dergleichen einstellbar ist und auf diese Weise das durch den Druckwasseranschluß 15 zuströmende Rohwasser auf den Hauptstromkanal 26 und den Teilstromkanal 25 verteilt, wobei das Aufteilungsverhältnis im Prinzip beliebig eingestellt werden kann, die Armatur jedoch vorzugsweise dafür ausgelegt ist, daß der größere Teil des Rohwassers durch den Hauptstromkanal 26 fließt. Dieser Hauptstromkanal 26 ist unmittelbar mit dem zentralen Kanal 7 verbunden, der in Verbindung mit Figur 2 beschrieben wurde. Der zentrale Kanal 7 ist von dem Figur 3 nur gestrichelt angedeuteten und hinter der Papierebene liegenden Rohransatz 7' gebildet.

Der Teilstrom wird über den Teilstromkanal 25 abgezweigt und führt zunächst durch einen Strömungsmengenmesser 16 in Form eines Zellrades oder Flügelrades. Von dort gelangt der Teilstrom in einen Zufuhrkanal 18, der in Verbindung mit dem ringförmigen Kanal 8 steht, der sich durch den Ringraum zwischen dem Rohransatz 7' und dem Rohransatz 8' ergibt, welcher in Figur 3 ebenfalls gestrichelt angedeutet ist. Dieser Rohransatz 8' ist wiederum von einem weiteren Rohransatz 9' konzentrisch umgeben, der den ringförmigen Kanal 9 von außen einschließt und von diesem ringförmigen Kanal 9 geht wiederum axial ein Kanal 19 aus, der über einen weiteren Strömungsmengenmesser in Form eines Zellrades 17 mit dem Wasserabgang 12 verbunden ist.

Bei dieser Anordnung wird über das Zellrad 17 die Gesamtmenge des die Filtervorrichtung durchströmenden Wassers erfaßt, während das Zell- oder Flügelrad 16 die Menge des Teilstromes durch den Kanal 25 erfaßt, so daß sich die Menge des durch den Hauptstromkanal 26 strömenden Wassers als Differenz des rückströmenden gefilterten Wassers und des abgezweigten Teilstromes ergibt.

Die Anzahl der Umdrehungen der Zellräder in den beiden Strömungsmengenmessern 16 und 17 ist proportional zu der hindurchgeströmten Wassermenge und wird vorzugsweise durch entsprechende Encoder elektrisch erfaßt und mit Hilfe einer elektronischen Meßvorrichtung angezeigt, die wiederum Gegenstand einer gleichzeitig eingereichten, getrennten Anmeldung derselben Anmelderin ist.

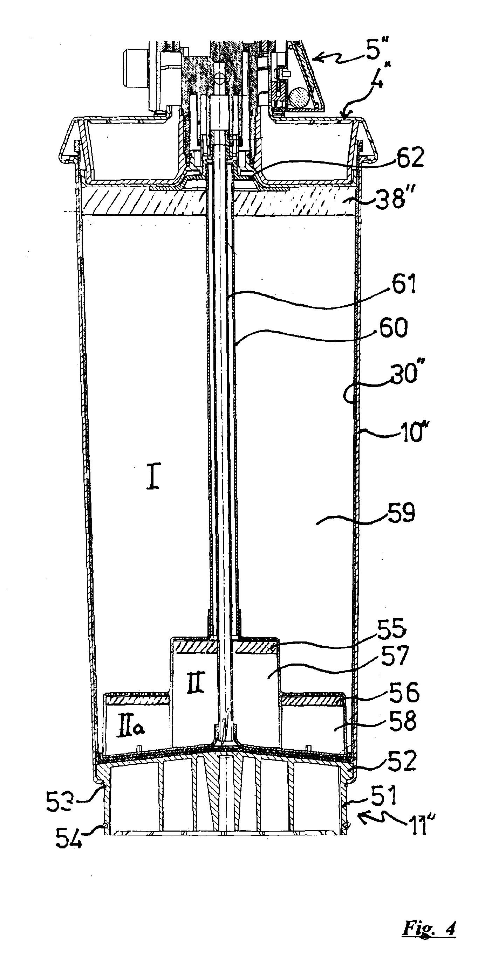

Figur 4 zeigt eine weitere, alternative Ausführungsform der vorliegenden Erfindung. Auch in diesem Fall ist ein Innenbehälter 30" in enger Passung in einen leicht konischen Außenbehälter 10" eingesetzt, wobei die Wandung des Außenbehälters aus einem hinreichend druckfesten Material besteht, wohingegen das Wandmaterial des Innenbehälters 30" gegebenenfalls dünner und auch aus einem weniger stabilen Material hergestellt sein kann, obwohl auch für den Innenbehälter zumindest eine gewisse Formstabilität gegeben sein sollte, solange er nicht unter Druck gesetzt wird.

Im Unterschied zu den vorher beschriebenen Ausführungsformen ist jedoch bei der Ausführungsform gemäß Figur 4 eine sehr große Bodenöffnung vorgesehen, die fast den gesamten Querschnitt im unteren Bereich des Außenbehälters 10" umfaßt, und in welche ein Bodeneinsatz 11" passend eingesetzt ist. Die Öffnung ist kreisförmig und der Innendurchmesser der Öffnung entspricht dem Außendurchmesser eines zylindrischen Fußteiles 51 des Bodeneinsatzes 11", welches nach oben hin nochmals durch einen Ansatz 52 stufenförmig erweitert ist, wobei der stufenförmige Ansatz 52 mit seinem Durchmesser auf den Innendurchmesser im unteren Bereich des Außenbehälters 10" abgestimmt ist, so daß Bodeneinsatz 11" und Außenbehälter 10" zusammen einen unten dicht und lückenlos geschlossenen Hohlraum bilden, in welchen der Innenbehälter 30" eingesetzt werden kann. In diesem Fall ist allerdings der Boden, das heißt die obere Fläche des Bodeneinsatzes 11" aus der Sicht des Behälters 10" leicht konkav ausgebildet. Auch hinsichtlich einiger weiterer Merkmale unterscheidet sich diese Ausführungsform von den zuvor beschriebenen Ausführungsformen. Der Deckel hat im wesentlichen die Form eines Ringes mit kastenförmigem Querschnitt, was noch weitgehend ähnlich zu dem Querschnitt des Deckels der vorher beschriebenen Ausführungsformen ist. Allerdings weist der Behälter keinen Flanschrand auf, sondern am oberen Rand des Behälters sind, ebenso wie am Außenrand des Deckels 4", Verschlußelemente vorgesehen, die hier nur angedeutet sind und die Form eines Bajonettverschlusses haben. In die innere Öffnung des Deckels 4" ist eine Armatur 5" eingesetzt, durch welche Wasser unter Druck von oben in die Filterkammern l und II bzw. lla eingeleitet wird. Hierzu ist in dem Armaturenkopf 5" ein Verzweigungsventil vorgesehen, welches einen Teil des Wassers durch ein zentrales Außenrohr 60 abwärts leitet, in welchem noch ein inneres Steigrohr 61 konzentrisch angeordnet ist. Ein weiterer Teil des Wassers wird durch das Verzweigungsventil auf eine obere Verteilerplatte 62 geleitet, die das dort eintretende Wasser im wesentlichen gleichmäßig über den gesamten Querschnitt des Behälters verteilt. In dem Filterraum list im wesentlichen ein lonenaustauscherharz 59 angeordnet, während in den Filterräumen II und lla im wesentlichen Aktivkohle vorgesehen ist, wobei selbstverständlich auch andere Filtermaterialien verwendet werden könnten. Der Teil des Wassers, welcher durch das äußere Fallrohr 60 abwärts strömt, wird nur durch den Filterraum II geleitet, in welchem Aktivkohle vorhanden ist und gelangt von unten durch eine Siebplatte zu der Eintrittsöffnung des zentralen Steigrohrs 61. Derjenige Teil des Wassers, welcher durch den Filterraum l und das lonenaustauscherharz 59 geleitet wird, tritt im unteren Bereich durch eine mit Öffnungen versehene obere Platte in den Filterraum lla ein, und an der Unterseite dieses Filterraumes lla durch eine Siebplatte wieder aus, vermischt sich mit dem aus dem Filterraum l austretenden Wasser und strömt ebenfalls durch das Steigrohr 61 nach oben. Die Filtermaterialien 57 und 58 sind, wie bereits erwähnt, Aktivkohle. Auf diese Weise wird ein Teil des Wassers, welches nur durch den Filterraum II hindurchtritt, ausschließlich durch Aktivkohle gefiltert und gegebenenfalls auch entkeimt, wohingegen der andere Teil des Wassers, der durch den Filterraum l und den Filterraum lla strömt, sowohl enthärtet wird als auch durch Aktivkohle gefiltert und gegebenenfalls entkeimt bzw. keimreduziertwird.

Die Rolle eines Ausgleichselementes wird von Vliespackungen erfüllt, die im oberen Bereich des Filterraumes 1 angeordnet sind und mit 38" bezeichnet sind, wobei entsprechende Vliese auch in den Filterräumen II und lla angeordnet sein können, die dort mit 55 und 56 bezeichnet sind. Insbesondere das Vliesmaterial 38" ist vorzugsweise elastisch nachgiebig, so daß es Volumenänderungen des im Bereich l vorhandenen Filtermaterials 59 ausgleichen kann, die bei lonenaustauscherharz auftreten können, wenn dieses zunächst im trockenen Zustand ist und erstmalig befeuchtet wird.

## Patentansprüche

1. Wasserfiltereinrichtung zur Reinigung und mindestens teilweisen Enthärtung von Rohwasser, mit einem Rohwasserzulauf (15) und einem Reinwasserabgang (12), wobei eine Trenneinrichtung (27) für die Aufteilung des über den Zulauf (27) einströmenden Rohwassers in zwei Teilströme vorgesehen ist, dadurch gekennzeichnet, daß für beide Teilströme mindestens teilweise unterschiedliche Filterstrecken (A, B) vorgesehen sind.

2. Wasserfiltereinrichtung nach Anspruch 1, dadurch gekennzeichnet, daß die Filtermaterialien (36, 37) entlang der unterschiedlichen Filterstrecken (A, B) mindestens teilweise unterschiedlich sind.

3. Wasserfiltereinrichtung nach einem der Ansprüche 1 oder 2, dadurch gekennzeichnet, daß eine Verbindungseinrichtung (38) zur Zusammenführung der beiden Teilströme vorgesehen ist.

4. Wasserfiltereinrichtung nach Anspruch 3, dadurch gekennzeichnet, daß die Verbindungseinrichtung unmittelbar vor einer der Filterstrecken (A, B) liegt.

5. Wasserfiltereinrichtung nach einem der Ansprüche 1 bis 4, dadurch gekennzeichnet, daß beide Filterstrecken einen gemeinsamen Endabschnitt (B) haben.

6. Wasserfiltereinrichtung nach Anspruch 5, dadurch gekennzeichnet, daß der Endabschnitt als Filtermaterial im wesentlichen nur Aktivkohle oder ähnliches Filtermaterial, zum Beispiel einen Aktivkohleblock oder einen Membranendfilter, enthält.

7. Wasserfiltereinrichtung nach Anspruch 6, dadurch gekennzeichnet, daß die Filterstrecke für den anderen Teilstrom über ein lonenaustauscherharz und über Aktivkohle oder einen Membranendfilter führt.

8. Wasserfiltereinrichtung nach einem der Ansprüche 1 bis 7, dadurch gekennzeichnet, daß das Verhältnis der Teilströme über ein Ventil (27) einstellbar ist.

9. Wasserfiltereinrichtung nach einem der Ansprüche 1 bis 8, dadurch gekennzeichnet, daß eine Meßeinrichtung (16, 17) zur Erfassung der Gesamtmenge sowie der Teilströme des hindurchströmenden Wassers vorgesehen ist.

10. Wasserfiltereinrichtung nach einem der Ansprüche 1 bis 9, wobei einer der Teilströme ein Hauptstrom ist und durch den größten Teil des Behälterquerschnittes vom Deckel zum Boden des Filters nacheinander durch zwei verschiedene Filtermaterialien hindurchgeführt wird, ein Teilstrom konzentrisch zu dem äußeren Teilstrom durch einen ringförmigen zentralen Raum nur durch eines der Filtermaterialien durchgeführt wird und der Rückstrom durch ein zentrales Steigrohr vom Boden zum Deckel des Behälters befördert wird, wobei die beiden Teilströme sich hinter den Filterstrecken im Bodenbereich des Behälters treffen.

11. Wasserfiltereinrichtung nach einem der Ansprüche 1 bis 9, wobei einer der Teilströme ein Hauptstrom und zentral in die Filtereinrichtung zugeführt wird, während der zusätzliche Teilstrom konzentrisch unmittelbar um den Hauptstrom herum zugeführt und der Rückstrom ebenfalls konzentrisch außen um den Teilstrom herum erfolgt.

12. Wasserfiltereinrichtung nach einem der Ansprüche 1 bis 10, dadurch gekennzeichnet, daß die möglicherweise verschiedenen Filtermaterialien (36, 37) übereinander geschichtet und voneinander getrennt sind, wobei der Hauptstrom so geführt wird, daß er beide Schichten durchströmt, während ein Teilstrom so geführt ist, daß er nur eine der Schichten durchströmt.

13. Wasserfiltereinrichtung nach einem der Ansprüche 11 oder 12, dadurch gekennzeichnet, daß der Hauptstrom (7) in einem Zentralrohr in einen unteren Verteilerraum eines Filterbehälters geführt wird, ein Teilstrom durch ein zu dem ersten Rohr konzentrisches zweites Rohr geführt wird, und daß im Grenzbereich zwischen einer unteren und einer oberen Filterschicht Öffnungen in dem zweiten Rohr vorgesehen sind bzw. dieses zweite Rohr dort mündet, und daß die zweite Filterstrecke im wesentlichen nur durch die obere Filterschicht führt.

14. Verfahren zur Reinigung und mindestens teilweisen Enthärtung von Rohwasser, durch Hinzuführen von Rohwasser zu einer Filtereinrichtung und Abziehen gereinigten und gefilterten Wassers, wobei das Rohwasser in zwei Teilströme aufgeteilt wird, die vor dem Austritt aus der Filtereinrichtung wieder zusammengeführt werden, **dadurch gekennzeichnet, daß** beide Teilströme mindestens teilweise unterschiedliche Filterstrecken (A, B) durchlaufen.

15. Verfahren nach Anspruch 14, dadurch gekennzeichnet, daß ein erster Teilstrom zentral in das Innere eines mit Filtermaterial gefüllten Behälters bis zu dessen Bodenbereich geführt wird und sich dort in einem Sammelraum verteilt und in einer das zentrale Rohr umgebenden Filterschicht aufsteigt.

16. Verfahren nach Anspruch 15, dadurch gekennzeichnet, daß die das Rohr umgebende Filterschicht aus zwei verschiedenen, übereinander angeordneten und durch einen Mischungsraum getrennten Filterschichten besteht.

17. Verfahren nach Anspruch 16, dadurch gekennzeichnet, daß der zweite Teilstrom über ein zu dem ersten Rohr konzentrisches Rohr zugeführt wird, welches im Bereich der Trennschicht zwischen den beiden Filterschichten endet bzw. dort Austrittsöffnungen aufweist.

18. Verfahren nach einem der Ansprüche 14 bis 17, dadurch gekennzeichnet, daß die Gesamtmenge des gefilterten Wassers sowie die relative Aufteilung zwischen den beiden Teilströmen gemessen und für einen Benutzer der Vorrichtung bei Bedarf angezeigt wird.

19. Verfahren nach Anspruch 14 oder einem der Ansprüche 16 bis 18, soweit nicht auf Anspruch 15 zurückbezogen, dadurch gekennzeichnet, daß ein erster Teilstrom in einem äußeren, ringförmigen Bereich, welcher den größten Teil des Querschnittes des Behälters umfaßt, vom Deckel in Richtung Boden durch das Filtermaterial hindurchgeführt wird, ein zweiter Teilstrom konzentrisch hierzu durch einen inneren Ringraum vom Deckel zum Bodenbereich und dort durch einen Aktivkohlefilter geführt wird, wobei beide Teilströme im Bodenbereich des Behälters zusammengeführt und durch ein zentrales Steigrohr zum Deckel heraufgeführt werden.
